Europäisches Patentamt

European Patent Office

Office européen des brevets

(11) Veröffentlichungsnummer: **0 283 870**
**B1**

(12) # EUROPÄISCHE PATENTSCHRIFT

(45) Veröffentlichungstag der Patentschrift:
31.10.90

(21) Anmeldenummer: **88103836.8**

(22) Anmeldetag: **11.03.88**

(51) Int. Cl.⁵: **B30B 9/24**, B01D 33/04,
B01D 37/04

(54) **Verfahren zum Entwässern von Filterkuchen und Vorrichtung zur Durchführung des Verfahrens.**

(30) Priorität: **21.03.87 DE 3709329**

(43) Veröffentlichungstag der Anmeldung:
**28.09.88 Patentblatt 88/39**

(45) Bekanntmachung des Hinweises auf die Patenterteilung:
**31.10.90 Patentblatt 90/44**

(84) Benannte Vertragsstaaten:
**AT BE CH ES FR GB GR IT LI LU NL SE**

(56) Entgegenhaltungen:
**EP-A- 0 215 653
DE-A- 2 725 703
GB-A- 2 026 334**

(73) Patentinhaber: **DORR-OLIVER INCORPORATED,
Corporate Headquarters 77, Havemeyer Lane P.O.
Box 9312, Stamford Connecticut 06904-9312(US)**

(72) Erfinder: **Pietzsch, Kurt, Friedrich-Bergius-Strasse 5,
D-6200 Wiesbaden(DE)**

(74) Vertreter: **Weber, Dieter, Dr. et al, Dr. Dieter Weber und
Dipl.-Phys. Klaus Seiffert Patentanwälte
Gustav-Freytag-Strasse 25 Postfach 6145,
D-6200 Wiesbaden 1(DE)**

**Beschreibung**

Die vorliegende Erfindung betrifft ein Verfahren zum Entwässern von Filterkuchen mit einer Bandpresse, bei welchem der auf einem Filtertuch aufliegende Filterkuchen über ein Bandfilter, vorzugsweise ein horizontales Vakuumbandfilter, und anschließend durch eine Bandpresse geführt wird, welche im wesentlichen aus einer Trommel besteht, um welche das Filtertuch teilweise derart herumgelegt ist, daß der Filterkuchen an der Trommel anliegt, wobei zusätzlich Preßwalzen Filtertuch und Filterkuchen an die Trommel anpressen und dadurch entwässern und wobei das Filtertuch angetrieben wird, so daß die Trommel auf der Filterkuchenseite des Filtertuches abrollt. Ebenso betrifft die vorliegende Erfindung eine Bandpresse, mit welcher ein derartiges Verfahren durchgeführt werden kann.

Das Filtertuch, welches im allgemeinen endlos ist, wird dabei zunächst über ein Vakuumbandfilter geführt, in welchem durch Unterdruck von der Seite des Filtertuches her Flüssigkeit aus dem auf dem Filtertuch liegenden Filterkuchen herausgesaugt wird. Der Filterkuchen wird am Ende eines solchen Bandfilters abgeworfen, und das Filtertuch wird zum vorderen Ende des Bandfilters zurückgeführt und nimmt dort neue Suspension auf, die entwässert werden soll. Oftmals ist diese Entwässerung jedoch nicht ausreichend, so daß auch en Filtersystem bekannt ist, bei welchem einem Bandfilter eine Bandpresse nachgeschaltet ist, in welcher das Filtertuch mit dem Filterkuchen in einer U-förmigen Schleife um eine Trommel herumgeführt wird, wobei Preßwalzen das Filtertuch mit dem Filterkuchen auf den Umfang der Trommel drücken und dabei den Filterkuchen auspressen und weiter entwässern.

Das in Form einer endlosen Schleife das gesamte System durchlaufende Filtertuch muß dabei eine entsprechende Länge aufweisen, um sowohl das Bandfilter wie auch die Bandpresse durchlaufen zu können. Bandfilter und Bandpresse weisen dabei im allgemeinen eigene getrennte Antriebe für das umlaufende Filtertuch auf.

Soweit derartige Bandpressen bisher bekannt sind, wird das Filtertuch in der Bandpresse durch eine außerhalb der Trommel liegende Antriebswalze angetrieben. Die Antriebswalze treibt dabei zunächst ein endloses Preßband an, welches mit Hilfe von Umlenkrollen in einer U-förmigen Schleife um die Trommel herum verläuft, wobei das Filtertuch mit dem Filterkuchen zwischen diesem Preßband und der Trommel angeordnet ist. Das derart angetriebene Preßband nimmt nun durch direkte Reibung das auf ihm liegende Filtertuch mit. Da Preßband und Filtertuch in einer U-förmigen Schleife um die Trommel herumgelegt sind, üben sie bereits eine erhebliche Kraft auf die Lager der Trommel aus, welche durch eine entsprechende Gegenkraft in den Lagern der Umlenkrollen des Preßbandes kompensiert wird. Die entsprechenden Reibungskräfte in den Lagern der Trommel werden zusätzlich noch erhöht durch von außen auf das Preßband und das Filtertuch andrückende Preßwalzen. Beim Antrieb des Filtertuches nimmt dieses den Filterkuchen und die Trommel an ihrem Umfang mit, wobei die Trommel praktisch auf dem Filterkuchen abrollt. Die dabei in den Lagern der Trommel zu überwindenden Reibungskräfte können eine erhebliche Spannung in dem Filtertuch erzeugen. Dies gilt umso mehr, wenn man durch zusätzliches Abbremsen der Trommel eine Scherwirkung auf den Filterkuchen erzeugen will, um so die Entwässerungswirkung zu verbessern. Das Filtertuch, welches letztlich durch die Reibung des Preßbandes angetrieben wird, verschleißt dabei relativ schnell, wird gedehnt und kann schließlich sogar reißen.

Gegenüber einem derartigen Verfahren ist es daher Aufgabe der vorliegenden Erfindung, ein Verfahren zum Entwässern von Filterkuchen mit den eingangs genannten Merkmalen zu schaffen, bei welchem das Filtertuch erheblich weniger bela stet wird und wobei eine wesentlich verbesserte Entwässerungswirkung erzielt werden kann.

Diese Aufgabe wird dadurch gelöst, daß die Trommel drehzahlvariabel angetrieben wird und somit der Antrieb des Filtertuches über den unter Scherwirkung stehenden Filterkuchen erfolgt und daß die Drehgeschwindigkeit der Trommel in Abhängigkeit von der Spannung des Filtertuches geregelt wird.

Dadurch, daß das Filtertuch auch indirekt über den Filterkuchen angetrieben wird, statt über die Reibwirkung eines Spannbandes oder einer außen am Filtertuch angreifenden Antriebsrolle, wird das Filtertuch weniger stark belastet und verschleißt auch nicht so schnell. Der Antrieb der Trommel erfolgt bewuß unabhängig vom Antrieb eines vorgeschalteten Bandfilters und außerdem mit variabler Drehzahl, da je nach der Art des Filterkuchens und nach der Oberflächenbeschaffenheit der Trommel ein gewisser Schlupf einkalkuliert werden muß, so daß die Spannung im Filtertuch nachläßt. Erfindungsgemäß wird jedoch die Drehgeschwindigkeit der Trommel in Abhängigkeit von der Spannung des Filtertuches geregelt, so daß hierdurch eine konstante und gleichmäßige Filtertuchspannung garantiert wird, wodurch der Verschleiß und die Dehnung des Filtertuches auf ein Minimum reduziert werden. Da der Filterkuchen die Antriebskraft von der Trommel auf das Filtertuch überträgt, wirken über die Dicke des Filterkuchens Scherkräfte, welche den Filterkuchen plastisch verformen und ein entsprechendes Scherfeld erzeugen. Dabei reißen im Inneren des Filterkuchens Flüssigkeitskanäle auf, die die Entwässerung des Filterkuchens begünstigen und beschleunigen.

Vorzugsweise erfolgt bei dem erfindungsgemäßen Verfahren die Messung der Spannung des Filtertuches über einen Ultraschallsensor, welcher den Durchhang des zwischen Bandfilter und Bandpresse freihängenden Filtertuches durch Abstandsmessung erfaßt.

Wird das Filtertuch über einen gewissen Abstand frei gespannt, so hängt es durch sein eigenes Gewicht, vor allem aber durch das Gewicht des Filterkuchens unter der Wirkung der Schwerkraft nach unten durch, wobei der Durchhang, d. h. die Abweichung der Filtertuchfläche von einer horizontalen Ebene durch die Auflagepunkte des Filtertuches, ein Maß für die Zugspannung im Filtertuch ist. Diese Abweichung ist in der Mitte zwischen den Auflagepunkten am größten, so daß zweckmäßigerweise hier die entsprechende Messung erfolgt. Dabei kann der Abstand des Filtertuches von einem bezüglich der Auflagepunkte des Filtertuches festen äußeren Punkt mit Hilfe eines Ultraschallsensors berührungslos sehr schnell gemessen werden, so daß die Nachregelung des Antriebes der Trommel in Sekundenbruchteilen erfolgen kann. Hierdurch erreicht man sehr geringe Schwankungen in der Zugbelastung des Filtertuches.

Hinsichtlich der zugehörigen Vorrichtung bezieht sich die vorliegende Erfindung auf eine Bandpresse, welche einem Bandfilter, insbesondere einem horizontalen Vakuumbandfilter an der Filterkuchenabwurfseite nachgeschaltet ist, mit einer drehbaren Trommel, auf deren Umfang zumindest teilweise ein auch über den Bandfilter verlaufendes Filtertuch mit einem Filterkuchen 7 anliegt, und mit einem Antrieb für das Filtertuch.

Wie eingangs bereits geschildert, wird das Filtertuch sehr stark belastet, wenn wie bei herkömmlichen Bandpressen das Filtertuch von seiner Unterseite her, d. h. auf der dem Filterkuchen und der Trommel gegenüberliegenden Seite des Filtertuches, angetrieben wird, sei es mit Hilfe eines Preßbandes oder einer einfachen Antriebswalze.

Hinsichtlich der Vorrichtung liegt der Erfindung daher die Aufgabe zugrunde, eine Bandpresse zu schaffen, bei welcher starke Belastungen und ein entsprechender Verschleiß des Filtertuches vermieden werden und dennoch eine bessere Entwässerung eines Filterkuchens bewirkt. Diese Aufgabe wird dadurch gelöst, daß der Bandfilter einen separaten Antrieb aufweist, daß bei einer Vorrichtung mit den eingangs genannten Merkmalen die Trommel als Antriebstrommel ausgebildet ist, daß eine Meßeinrichtung vorgesehen ist, welche vorzugsweise zwischen Bandfilter und Bandpresse die Spannung des Filtertuches mißt, und daß die Meßeinrichtung über eine Steuereinrichtung zur Regelung der Drehgeschwindigkeit der Trommel mit dem Antrieb verbunden ist.

Bei einem derartigen Antrieb werden die Zugkräfte auf das Filtertuch nicht unmittelbar von einer Antriebseinheit übertragen, sondern indirekt über den Filterkuchen. Der Filterkuchen selbst hat nur geringe Festigkeit und Zusammenhalt, liegt jedoch auf der gesamten Fläche des Filtertuches auf, wodurch die Antriebskräfte sich über eine sehr große Fläche verteilen und ihre Übertragung auf das Filtertuch möglich wird. Die Antriebskräfte verteilen sich dabei sehr gleichmäßig, da der Filterkuchen bei lokaler Überlastung sich sofort verformt bzw. verschiebtg und nachgibt.

Gleichzeitig erzeugen die Antriebskräfte der Trommeloberfläche am Filterkuchen Scherkräfte, die zu einem Scherfeld über die Dicke des Filterkuchens hinweg führen. Die damit verbundene Verschiebung der aufeinanderliegenden Filterkuchenschichten gegeneinander wirkt sich positiv auf die Entwässerungswirkung der Bandpresse aus.

Das Filtertuch wird vor allem auch dadurch geschont, daß das Bandfilter einen von der Bandpresse getrennten Antrieb aufweist.

Bei einer bisher bekannten Vorrichtung wird dagegen das Filtertuch ausschließlich durch den Antrieb der Bandpresse sowohl durch die Bandpresse als auch durch das Bandfilter bewegt. Hierbei wirken sehr große Zugkräfte auf das Filtertuch, da es unter Überwindung erheblicher Reibungskräfte durch das Bandfilter gezogen werden muß. Durch einen vom Antrieb der Bandpresse getrennten Bandfilterantrieb kann man erfindungsgemäß die hohe Beanspruchung des Filtertuches erheblich verringern.

Durch die Meßeinrichtung wird die Spannung im Filtertuch kontinuierlich erfaßt, und die Meßwerte werden über eine Steuereinrichtung unmittelbar zur Regelung der Drehgeschwindigkeit der Antriebstrommel benutzt. Bei korrekt eingestellten Regelparametern der Steuereinrichtung bleibt dann die Spannung im Filtertuch während des Betriebes der Bandpresse im wesentlichen konstant, unterliegt also nur sehr geringen Schwankungen.

Damit werden ein starker Verschleiß und eine übermäßige Dehnung des Filtertuches vermieden.

Bevorzugt wird dabei ein Preßband, welches erfindungsgemäß als Endlosband durch radial verschiebbare Umlenkrollen variabel spannbar ist.

Werden die Umlenkrollen radial in Umlenkrichtung auf die Anlageflächen des Preßbandes verschoben, so wird dieses stärker gespannt und drückt damit das Filtertuch fester an die Trommel an.

Als zweckmäßig erweist es sich, wenn erfindungsgemäß das Preßband perforiert ist.

Auf diese Weise kann die durch das Filtertuch austretende Flüssigkeit leicht ablaufen.

Bevorzugt wird jedoch eine Ausführungsform der Erfindung, bei welcher das Preßband im wesentlichen aus parallelen und gegebenenfalls miteinander verbundenen Gummigurten besteht.

Ein derartiges Preßband erlaubt die Übertragung relativ großer Anpreßkräfte auf das Filtertuch und ist gleichzeitig gut durchlässig für die aus dem Filtertuch austretende Filterflüssigkeit.

Erfindungsgemäß ist in vorteilhafter Weise vorgesehen, daß mindestens ein, vorzugsweise zwei oder drei Preßwalzen an der Trommel und vorzugsweise an deren aufsteigender Seite angeordnet sind.

Die Preßwalzen sind mit ihren Achsen parallel zur Achse der Trommel ausgerichtet, und das Filtertuch mit dem Filterkuchen verläuft zwischen Trommel und Preßwalzen, so daß die Preßwalzen von der Unterseite her auf das Filtertuch drücken und dieses mit dem Filterkuchen an die Trommel anpressen. Dabei wird in dem Filterkuchen enthaltene Flüssigkeit verstärkt aus diesem herausgedrückt und kann durch das Filtertuch ablaufen. Im allgemeinen wird die Trommel auch noch von einem Abdeckband umhüllt, welches dann zwischen Trommeloberfläche und Filterkuchen liegt.

Weiterhin hat es sich als zweckmäßig erwiesen, wenn erfindungsgemäß jede Preßwalze Pneumatikzylinder aufweist, durch welche sie elastisch an die Unterseite eines Preßbandes andrückbar ist, wobei das Filtertuch auf dem Preßband aufliegt und durch dieses mit dem Filterkuchen an den Umfang der Trommel andrückbar ist. Die Pneumatikzylinder üben eine gleichmäßige Kraft aus und können gegebenenfalls auch nachgeben, falls der Filterkuchen nicht homogen oder nicht gleichmäßig dick auf dem Filtertuch liegt.

Eine erste Preßrolle liegt dabei vorzugsweise mit einem Anpreßdruck am Filter an, der zwischen 5 und 10 kp/cm (linear) liegt. Das heißt eine 1 m lange Preßwalze müßte mit einer Kraft von 500 bis 1000 kp an das Filtertuch bzw. gegen die Trommel gedrückt werden. Der maximale Anpreßdruck der zweiten Preßrolle entspricht maximal einer Kraft von 15 bis 25 kp/cm (linear).

Zwischen den Preßrollen und dem Filtertuch ist dabei vorzugsweise noch ein Preßband angeordnet, welches das Filtertuch auf dem Umfang der Trommel führt und auch außerhalb des Bereiches der Preßrollen leicht andrückt.

Hinsichtlich der zugehörigen Meßeinrichtung für die Messung der Spannung des Filtertuches hat es sich als besonders vorteilhaft erwiesen, daß gemäß der Erfindung das Filtertuch zwischen dem Bandfilter und der Bandpresse frei gespannt ist und daß die Meßeinrichtung einen Ultraschallsensor zur Erfassung im wesentlichen des vertikalen Abstandes zwischen diesem Sensor und dem Filtertuch im Bereich zwischen Bandfilter und Bandpresse aufweist.

Wie bereits erwähnt, hängt das frei gespannte Filtertuch je nach Spannung mehr oder weniger stark durch, wobei dieser Durchhang sehr schnell und einfach mit einem Ultraschallsensor ermittelt werden und die daraus resultierende Spannung im Filtertuch berechnet werden kann. Die Messung wird dabei am genauesten, wenn der Ultraschallsensor im Bereich des größten Durchhanges, d. h. in der Mitte zwischen den Auflagepunkten des frei gespannten Filtertuches, und senkrecht über oder unter dem Filtertuch angeordnet ist.

Selbstverständlich kann die Bandpresse nicht nur im Anschluß an ein Bandfilter verwendet werden, sondern statt des Bandfilters konnte ebensogut eine Beschickungsanlage vorgesehen sein, welche das Filtertuch mit einem geeigneten Material beschichtet, welches sich ähnlich wie ein Filterkuchen auf das Filtertuch auftragen läßt.

Die Erfindung wird anhand der folgenden Beschreibung einer bevorzugten Ausführungsform und der dazugehörigen Figuren erläutert. Es zeigen

Fig. 1 einen Längsschnitt durch eine erfindungsgemäße Bandpresse,

Fig. 2 einen Teil der angetriebenen Trommel mit Filterkuchen, Filtertuch, Preßband und Preßwalze und

Fig. 3 schematisch die Scherwirkung auf den Filterkuchen entlang des Trommelumfangs und insbesondere im Bereich einer Preßwalze.

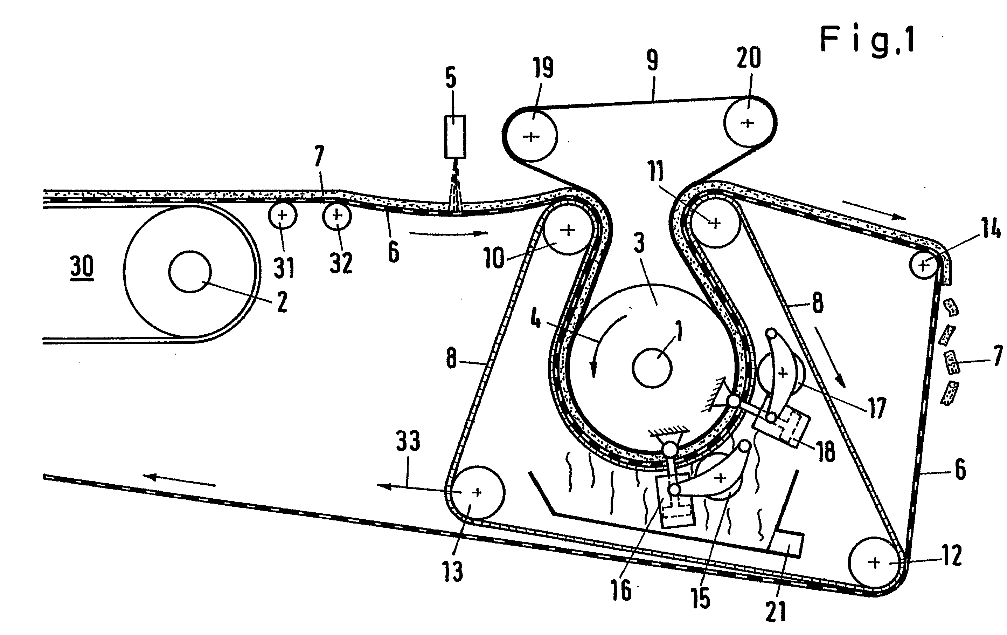

In Fig. 1 erkennt man längs das Ende eines horizontalen Vakuumbandfilters mit einem separaten Antrieb 2 für das Filtertuch 6. Das Filtertuch 6 läuft über Stützrollen 31 und 32, hängt im Bereich zwischen der Stützrolle 32 und der Umlenkrolle 10 frei durch und wird an der Umlenkrolle 10 zwischen einem Preßband 8 und einem Abdeckband 9 aufgenommen und in einer U-förmigen Schleife um die Trommel 3 herumgeführt. Das Filtertuch 6 durchläuft nach Art eines Endlosbandes sowohl das Vakuumfilter 30 als auch die Bandpresse. Während das Filtertuch im Vakuumfilter 30 durch dessen Antrieb 2 transportiert wird, wird es in der Bandpresse von der Trommel 3 angetrieben, welche sich in Richtung des Pfeiles 4 dreht. Durch das Preßband, welches durch die Umlenkrollen 10, 11, 12 und 13 geführt wird, wird das Filtertuch 6 mit dem Filterkuchen 7 in einer U-förmigen Schleife um die Trommel 3 herumgelegt, wobei der Filterkuchen auf etwa drei Viertel des Umfangs der Trommel an deren Außenseite anliegt. Zwischen der Trommel 3 und dem Filterkuchen 7 befindet sich nur noch ein Abdeckband 9, welches in ähnlicher Weise wie das Preßband und das Filtertuch U-förmig um die Trommel herumgelegt ist. Preßband und Abdeckband sind ebenfalls Endlosbänder. Der Filterkuchen wird durch das Preßband 8 und durch zusätzliche Preßwalzen 15 und 17 fest an die Trommel 3 angepreßt und dadurch entwässert. Die Flüssigkeit kann dabei durch das Filtertuch 6 und durch das perforierte oder streifenförmige Preßband nach unten abfließen. Dabei wird es in einer Wanne mit Ablaufrinne 21 aufgefangen.

Wie man am rechten Rand der Fig. 1 erkennt, wird der ausgepreßte Filterkuchen dort abgeworfen, und das Filtertuch 6 wird zum Vakuumfilter 30 zurückgeführt.

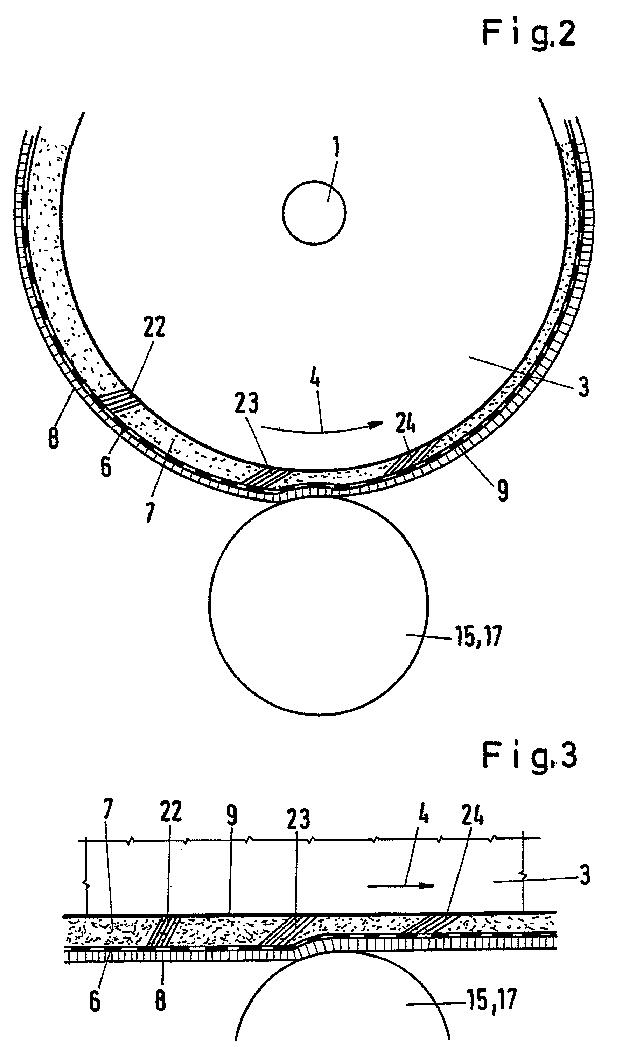

Das Preßband 8 besteht vorzugsweise aus parallel verlaufenden Gummigurten, welche auch miteinander verbunden sein können, wobei die Spannung in dem Preßband 8 variabel eingestellt werden kann durch eine radiale Bewegung der Umlenkrolle 13 in Richtung des Pfeiles 33. Durch eine erhöhte Spannung des Preßbandes 8 wird das Filtertuch 6 mit dem Filterkuchen 7 fester an die Trommel 3 bzw. an das auf der Trommel 3 aufliegende Abdeckband 9 angepreßt, so daß auch schon ohne die Anpreßwalzen 15 und 17 eine gute Vorentwässerung erreicht wird. Da das Filtertuch 6 im Bereich der Bandpresse nur durch die Trommel 3 und deren Antrieb 1 angetrieben wird, muß diese Kraft über das Abdeckband 9 und den Filterkuchen 7 auf das Filtertuch 6 übertragen werden. Da der Filterkuchen nur aus mehr oder weniger lose aufeinanderliegenden Teilchen besteht, welche durch Adhäsion aneinanderhaften, wird zunächst nur die oberste Schicht des Filterkuchens 7 von der Trommeloberfläche bzw. von dem Abdeckband 9 erfaßt, und die tieferen Schichten des Filterkuchens 7 folgen wegen der Haftung der Teilchen aneinander mit einer gewissen Verzögerung nach, so daß der Filterkuchen 7 insgesamt geschert wird, wie es durch die schematisch dargestellten Scherfelder 22, 23 und 24 in den Fig. 2 und 3 angedeutet ist. Abgesehen von dieser Scherung des Filterkuchens kann noch ein zusätzlicher Schlupf zwischen Antriebstrommel 3 und Filtertuch 6 auftreten, wenn das Abdeckband 9 stückweise über die Oberfläche des Filterkuchens 7 gleitet oder wenn übereinanderliegende Filterkuchenschichten sich stärker gegeneinander verschieben. Einen Schlupf zwischen dem Abdeckband 9 und der Oberfläche der Trommel 3 kann man durch geeignete Materialwahl und Oberflächengestaltung weitgehend ausschließen.

Der Trommelantrieb 1 wird in Abhängigkeit von der Spannung im Filtertuch 6 gesteuert, wobei die Spannung durch eine Meßeinrichtung 5 gemessen wird, welche hier konkret als Ultraschallsensor 5 ausgeführt ist. Die Spannung des Filtertuches 6 wird dabei indirekt gemessen durch Ermittlung des Abstandes des Filtertuches 6 vom Ultraschallsensor 5. Der Ultraschallsensor 5 ist fest angeordnet in Bezug auf die Lage der Stützrolle 32 und der Umlenkrolle 10, welche die Auflage für das dazwischen frei durchhängende Filtertuch 6 bilden. Vorzugsweise wird der Durchhang des Filtertuches genau in der Mitte zwischen den Auflagepunkten auf der Stützrolle 32 und der Umlenkrolle 10 gemessen. In Fig. 1 ist der Ultraschallsensor 5 oberhalb des Filtertuches 6 angeordnet und mißt den Abstand des Filtertuches 6 vom Ultraschallsensor 5 am filterkuchenfreien Randstreifen. Falls der Filterkuchen 7 durch starke Absorption oder Reflexion die Messung zu sehr beeinträchtigt, kann der Ultraschallsenor 5 auch unterhalb des Filtertuches 6 und gegebenenfalls seitlich versetzt angeordnet sein, um Verfälschungen durch herabtropfende Filterflüssigkeit zu vermeiden.

Der Ultraschallsensor 5 ist mit einer nicht dargestellten Steuereinrichtung gekoppelt, die aus den vom Ultraschallsensor 5 ermittelten Abstandswerten die gewünschte Drehzahl der Antriebstrommel 3 errechnet und entsprechende Korrekturimpulse auf den Antrieb 1 der Trommel 3 gibt. Ist der Durchhang des Filtertuches 6 zu groß, so mißt in dem dargestellten Beispiel der Ultraschallsensor 5 einen großen Abstand, und durch die Steuereinrichtung wird ein Korrekturimpuls auf den Antrieb 1 gegeben, durch welchen die Trommel 3 beschleunigt wird. Ist der Durchhang sehr klein, das Filtertuch 6 also sehr straff gespannt, so mißt der Ultraschallsensor einen kleinen Abstandswert, und die Steuereinrichtung sorgt dann für eine langsamere Drehung der Trommel 3. Da die Ultraschallmessung sehr schnell erfolgt und auch die Steuerelektronik sehr schnell reagiert, können die Schwankungen der Spannung im Filtertuch 6 sehr gering gehalten werden.

Anhand der Fig. 2 und 3 soll nun vor allem die Scherwirkung auf den Filterkuchen 7 erläutert werden, welche durch die Preßwalzen 15, 17 noch verstärkt wird. Die Trommel 3 wird durch ihren Antrieb 1 in Richtung des Pfeiles 4 angetrieben. Wie bereits beschrieben, nimmt sie dabei das Abdeckband 9 und den Filterkuchen 7 aufgrund von Adhäsions- bzw. Reibungskräften mit. Da das Filtertuch 6 auf dem Preßband 8 und dieses wiederum auf den Umlenkrollen 10 bis 13 aufliegt, setzt das Filtertuch 6 dem Antrieb durch die Trommel 3 Trägheits- und Reibungswiderstände entgegen. Der Filterkuchen 7 wird an seiner Oberseite also durch die Trommeloberfläche bzw. das Abdeckband 9 mitgenommen und an seiner Unterseite durch das Filtertuch 6 zurückgehalten. Dadurch wird der Filterkuchen 7 in sich geschert, wie es durch die schräg verlaufenden Linien in den Scherfeldern 22, 23 und 24 angedeutet ist. Aufgrund eines gewissen Schlupfes nimmt die Neigung der Scherfeldlinien, d. h. derjenigen Linien, welche Teilchen miteinander verbinden, die ursprünglich vor dem Eintritt in die Bandpresse vertikal übereinander im Filterkuchen 7 angeordnet waren, zu.

Im Bereich der Preßwalzen 15, 17 wird der Filterkuchen zunächst einmal in vertikaler Richtung zusammengepreßt. Auch hierdurch nimmt die Neigung der Scherfeldlinien noch weiter zu.

In der Praxis hat es sich gezeigt, daß durch eine solche Scherwirkung die Entwässerung des Filterkuchens erleichtert und beschleunigt wird.

In Fig. 3 ist eine der Preßwalzen 15, 17 zusammen mit dem Preßband 8, dem Filtertuch 6, dem Filterkuchen 7 und dem Abdeckband 9 nochmals schematisch dargestellt, wobei das Filtertuch 6 mit dem Filterkuchen 7 und den beiden begrenzenden Bändern 8, 9 horizontal von der Trommel 3 abgewickelt dargestellt sind. Durch diese Darstellung wird die Neigung der Scherfeldlinien verdeutlicht, welche von links nach rechts zunimmt. Im Bereich der Preßwalze 15, 17 nimmt die Scherwirkung auch deshalb noch weiter zu, weil hier durch den Druck der Preßwalze 15, 17 das Anpreßband 8 und das Filtertuch 6 stärker gebremst werden als in den übrigen Bereichen.

Im Gegensatz dazu verläuft bei herkömmlichen Bandpressen, welche das Filtertuch mit Hilfe des Preßbandes 8 oder mit Hilfe einer Antriebswalze antreiben und über den Filterkuchen 7 die Antriebstrommel 3 mitnehmen, in umgekehrter Richtung, wobei im Bereich der Preßwalzen die Neigung der Scherfeldlinien abnimmt anstatt zuzunehmen. Auch in dieser Hinsicht bietet die vorliegende Bandpresse offensichtliche Vorteile.

**Patentansprüche**

1. Verfahren zum weiteren Entwässern von Filterkuchen (7) mit einer Bandpresse, bei welchem der auf einem Filtertuch (6) aufliegende Filterkuchen (7) über ein Bandfilter (30), vorzugsweise ein horizontales Vakuumbandfilter, und anschließend durch eine Bandpresse geführt wird, welche im wesentlichen aus einer Trommel (3) besteht, um welche das Filtertuch (6) teilweise derart herumgelegt ist, daß der Filterkuchen (7) an der Trommel (3) anliegt, wobei zusätzliche Preßwalzen (15, 17) Filtertuch (6) und Filterkuchen (7) an die Trommel (3) anpressen und dadurch entwässern und wobei das Filtertuch (6) angetrieben wird, so daß die Trommel (3) auf dem Filterkuchen (7) abrollt, dadurch gekennzeichnet, daß die Trommel (3) drehzahlvariabel angetrieben wird und somit der Antrieb des Filtertuches (6) indirekt über den unter Scherwirkung stehenden Filterkuchen (7) erfolgt und daß die Drehgeschwindigkeit der Trommel (3) in Abhängigkeit von der Spannung des Filtertuches (6) geregelt wird.

2. Verfahren nach Anspruch 1, dadurch gekennzeichnet, daß die Messung der Spannung des Filtertuches (6) über einen Ultraschallsensor (5) erfolgt, welcher den Durchhang des zwischen Bandfilter (30) und Bandpresse freihängenden Filtertuches (6) durch Abstandsmessung erfaßt.

3. Bandpresse, welche einem Bandfilter (30), insbesondere einem horizontalen Vakuumbandfilter an der Filterkuchenabwurfseite nachgeschaltet ist, mit einer drehbaren Trommel (3), auf deren Umfang zumindest teilweise ein auch über den Bandfilter verlaufendes, im allgemeinen endloses Filtertuch (6) mit einem Filterkuchen (7) anliegt, und mt einem Antrieb für das Filtertuch (6), **dadurch gekennzeichnet**, daß die Bandpresse einen separaten Antrieb aufweist, daß die Trommel (3) als Antriebstrommel ausgebildet ist, daß eine Meßeinrichtung (5) vorgesehen ist, welche vorzugsweise zwischen Bandfilter (30) und Bandpresse die Spannung des Filtertuches (6) mißt, und daß die Meßeinrichtung (5) über eine Steuerung zur Regelung der Drehgeschwindigkeit der Antriebstrommel (3) mit dem Trommelantrieb (1) verbunden ist.

4. Bandpresse nach Anspruch 3, **dadurch gekennzeichnet**, daß mindestens eine, vorzugsweise zwei oder drei Preßwalzen (15, 17) an der Trommel (3) und vorzugsweise an deren aufsteigender Seite angeordnet sind.

5. Bandpresse nach Anspruch 4, **dadurch gekennzeichnet**, daß jede Preßwalze (15, 17) Pneumatikzylinder (16, 18) aufweist, durch welche die Preßwalzen (15, 17) elastisch an die Unterseite eines Preßbandes (8) andrückbar sind, wobei das Filtertuch (6) auf dem Preßband (8) aufliegt und durch dieses mit dem Filterkuchen (7) an den Umfang der Trommel (3) andrückbar ist.

6. Bandpresse nach Anspruch 5, **dadurch gekennzeichnet**, daß das Preßband (8) als Endlosband durch mindestens eine radial verschiebbare Umlenkrolle (10, 11, 12, 13) variabel spannbar ist.

7. Bandpresse nach Anspruch 5 oder 6, **dadurch gekennzeichnet**, daß das Preßband (8) perforiert ist.

8. Bandpresse nach einem der Ansprüche 5 bis 7, **dadurch gekennzeichnet**, daß das Preßband im wesentlichen aus parallelen, gegebenenfalls miteinander verbundenen Gummigurten besteht.

9. Bandpresse nach einem der Ansprüch 3 bis 8, **dadurch gekennzeichnet**, daß das Filtertuch (6) zwischen dem Bandfilter (30) und der Bandpresse frei gespannt ist und daß die Meßeinrichtung (5) einen Ultraschallsensor zur Erfassung im wesentlichen des vertikalen Abstandes zwischen diesem Sensor und dem Filtertuch (6) im Bereich zwischen Bandfilter (30) und Bandpresse aufweist.

**Revendications**

1. Procédé pour la déshydratation plus poussée de gâteaux de filtration (7) à l'aide d'une presse à bande, dans laquelle le gâteau de filtration (7), se trouvant sur un tissu filtrant (6), est envoyé, par l'intermédiaire d'un filtre à bande (30), de préférence un filtre à bande sous vide horizontal, puis à travers une presse à bande, laquelle est pour l'essentiel constituée d'un tambour (3), autour duquel le tissu filtrant (6) est disposé de façon que le gâteau de filtration (7) s'appuie contre le tambour (3), auquel cas des rouleaux presseurs supplémentaires (15, 17) appuient le tissu filtrant (6) et le gâteau de filtration (7) contre le tambour (3) et de ce fait assurent une déshydratation, le tissu filtrant (6) étant eintraîné de façon que le tambour (3) roule sur le gâteau de filtration (7), caractérisé en ce que le tambour (3) est entraîné à une vitesse de rotation variable, de sorte que l'entraînement du tissu filtrant est réalisé d'une manière indirecte par l'intermédiaire du gâteau de filtration (7), soumis à un effet de cisaillement, et en ce que la vitesse de rotation du tambour (3) est régulée en fonction de la tension du tissu filtrant (6).

2. Procédé selon la revendication 1, caractérisé en ce que la mesure de la tension du tissu filtrant (6) est réalisée par l'intermédiaire d'un capteur à ultrasons (5), lequel détecte, par une mesure de distance, le flèche du tissu filtrant (6), en suspension libre entre le filtre à bande (30) et la presse à bande.

3. Presse à bande, disposée en aval d'un filtre à bande (30), en paritculier d'un filtre à bande sous vide horizontal, côté déchargement du gâteau de filtration, comportant un tambour rotatif (3) sur la périphérie duquel s'appuie, au moins partiellement, un tissu filtrant (6) en général sans fin, courant lui aussi sur le filtre à bande et portant un gâteau de filtration (7), et avec un entraînement pour le tissu filtrant (6), caractérisée en ce que la presse à bande comporte un entraînement distinct; que le tambour (3) est conçu comme un tambour d'entraînement; qu'il est prévu un dispositif de mesure (5), lequel mesure, de préférence entre le filtre à bande (30) et le presse à bande, la tension du tissu filtrant (6); et que le dispositif de mesure (5) est, par l'intermédiaire d'un système de commande assurant la régulation de la vitesse de rotation du tambour d'entraînement (3), relié à l'entraînement de tambour (1).

4. Presse à bande selon la revendication 3, caractérisée en ce qu'au moins un rouleau presseur (15, 17), de préférence deux ou trois, sont disposés contre le tambour (3), et de préférence sur son côté ascendant.

5. Presse à bande selon la revendication 4, caractérisée en ce que chaque rouleau presseur (15, 17) comporte un vérin pneumatique (16, 18), par lequel le rouleau presseur (15, 17) s'appuie d'une manière élastique sur la face intérieure d'une bande de pressage (8), le tissu de filtration (6) s'appuyant sur la bande de pressage (8) et, sous l'effet de cette dernière, pouvant être pressé avec le gâteau de filtration (7) contre la périphérie du tambour (3).

6. Presse à bande selon la revendication 5, caractérisée en ce que la bande de pressage (8) peut, en tant que bande sans fin, subir une tension variable sous l'effet d'au moins un rouleau de renvoi (10, 11, 12, 13) pouvant se déplacer radialement.

7. Presse à bande selon les revendications 5 ou 6, caractérisée en ce que la bande de pressage (8) est perforée.

8. Presse à bande selon l'une des revendications 5 à 7, caractérisée en ce que la bande de pressage est essentiellement constituée de courroies en caoutchouc parallèles, éventuellement reliées les unes aux autres.

9. Presse à bande selon l'une des revendications 3 à 8, caractérisée en ce que le tissu filtrant est tendu en tension libre entre le filtre à bande (30) et la presse à bande, et que le dispositif de mesure (5) comporte un capteur à ultrasons, destiné à détecter essentiellement la distance verticale entre ce capteur et le tissu de filtration (6), dans la zone située entre le filtre à bande (30) et la presse à bande.

## Claims

1. A method of further removing water from filter cakes (7) with a belt press, wherein the filter cake (7) which lies on a filter cloth (6) is passed over a belt filter (30), preferably a horizontal vacuum belt filter, and then passed through a belt press which essentially comprises a drum (3) around which the filter cloth (7) is partially laid in such a way that the filter cake (7) lies against the drum (3), wherein additional pressing rollers (15, 17) press filter cloth (6) and filter cake (7) against the drum (3) and thereby remove water therefrom, and wherein the filter cloth (6) is driven so that the drum (3) rolls against the filter cake (7), characterised in that the drum (3) is driven with a variable speed of rotation and thus the drive for the filter cloth (6) is effected indirectly by way of the filter cake (7) which is subjected to a shearing effect and that the speed of rotation of the drum (3) is regulated in dependence on the tension of the filter cloth (6).

2. A method according to claim 1 characterised in that the tension of the filter cloth (6) is measured by way of an ultrasound sensor (5) which by distance measurement detects the sag of the filter cloth (6) which hangs free between the belt filter (30) and the belt press.

3. A belt press which is disposed downstream of a belt filter (30), in particular a horizontal vacuum belt filter, at the filter cake discharge side, comprising a rotatable drum (3) against the periphery of which a generally endless filter cloth (6) at least partially lies with a filter cake (7), the filter cloth also extending over the belt filter, and comprising a drive for the filter cloth (6), characterised in that the belt press has a separate drive, that the drum (3) is in the form of a drive drum, that there is provided a measuring means (5) for measuring the tension of the filter cloth (6) preferably between the belt filter (30) and the belt press, and that the measuring means (5) is connected to the drum drive (1) by way of a control means for regulating the speed of rotation of the drive drum (3).

4. A belt press according to claim 3 characterised in that at least one and preferably two or three pressing rollers (15, 17) are arranged at the drum (3) and preferably at the upwardly moving side thereof.

5. A belt press according to claim 4 characterised in that each pressing roller (15, 17) has pneumatic cylinders (16, 18) by which the pressing rollers (15, 17) can be resiliently pressed against the underside of a pressing belt (8) wherein the filter cloth (6) lies on the pressing belt (8) and can be pressed by same, with the filter cake (7), against the periphery of the drum (3).

6. A belt press according to claim 5 characterised in that the pressing belt (8) is in the form of an endless belt and can be variably tensioned by at least one radially displaceable direction-changing roller (10, 11, 12, 13).

7. A belt press according to claim 5 or claim 6 characterised in that the pressing belt (8) is perforated.

8. A belt press according to one of claims 5 to 7 characterised in that the pressing belt essentially comprises parallel and possibly interconnected rubber belt members.

9. A belt press according to one of claims 3 to 8 characterised in that the filter cloth (6) is freely tensioned between the belt filter (30) and the belt press and that the measuring means (5) has an ultrasound sensor for detecting substantially the vertical distance between said sensor and the filter cloth (6) in the region between the belt filter (30) and the belt press.

# Fig.1

Fig.2

Fig.3